# EUROPEAN PATENT SPECIFICATION

(11) **EP 4 361 361 B1**
(45) Date of publication and mention of the grant of the patent: **08.10.2025**
(21) Application number: 23191220.5
(22) Date of filing: 12.08.2023
(51) Int. Cl.: E03C 1/044, B67D 1/00, C02F 9/20

(54) **WATER OUTLET EQUIPMENT INSTALLED IN A NARROW SPACE, INSTALLATION METHOD AND ASSEMBLY METHOD THEREOF**
WASSERABLASSAUSRÜSTUNG, DIE AUF ENGSTEM RAUM INSTALLIERT IST, INSTALLATIONSMETHODE UND MONTAGEMETHODE
EQUIPEMENT DE SORTIE D'EAU INSTALLÉ DANS UN ESPACE ÉTROIT, PROCÉDÉ D'INSTALLATION ET PROCÉDÉ D'ASSEMBLAGE DE CELUI-CI

(30) Priority: 31.10.2022 CN 202222906339 U
(43) Date of publication of application: 01.05.2024
(73) Proprietor: Xiamen Aquasu Electric Shower Co., Ltd., Xiamen City, Fujian (CN)
(72) Inventor: HOU, Quanduo, Xiamen City (CN); ZENG, Yan, Xiamen City (CN)
(74) Representative: Chung, Hoi Kan

(56) References cited:
- EP-A1- 3 699 138
- WO-A1-2012/178044
- WO-A2-2010/056486
- US-A1- 2017 121 165

## Description

### FIELD OF THE DISCLOSURE

The present disclosure relates a water outlet equipment, installed in a kitchen cabinet, installation method and assembly method thereof.

### BACKGROUND OF THE DISCLOSURE

For people's domestic water convenience, there are water outlets with different functions installed in the kitchen. Different water tanks and waterway connections are expected according to the needs of users, such as providing purified water, ice water, boiling water, soda water, sparkling water, etc.

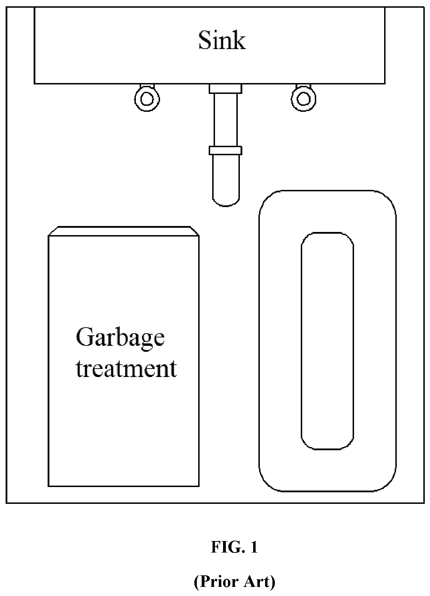

Due to the limited installation space in the kitchen, when installing the water outlet, the frequent installation space is the bottom of the cabinet. In view of the needs of young people living alone, most of the available cabinets in the market are designed to have a single-bowl kitchen sink (as shown in FIG. 1). In the case of single-bowl design, the space at the bottom is more limited than others. In some families, part of the space under the sink will be occupied by a trash can or a garbage disposal device, which leads to even smaller installation space. All of these make it difficult for the water outlet to be placed at the bottom of the cabinet, and it is even more difficult for those water outlets available on the market to be installed in the narrow space under the single-bowl kitchen sink.

Due to the limited and narrow installation space at the bottom of the cabinet, and the low location of the cabinet, uses would have to half-bend to achieve the heavy water outlets which have multiple water tanks, metal pipes, electrical components, etc. no matter when putting in or taking out the water outlets for maintenance. However, bending over to move a heavy water outlet may cause injury. Accordingly, large size, complicated installation, and challenging transportation have become unavoidable problems for water outlets suited for single-bowl kitchen sinks.

European Patent Publication No. 3 699 138 A1 disclosed a pre-assembled water based liquid supply system that aims to provide a more efficient, space-saving, and safer alternative to traditional water systems in kitchens. The technical problem addressed by the invention is the laborious and risky installation, maintenance, and service of traditional water systems, which require individual installation of various components and take up space in the kitchen cabinet. The invention provides a pre-assembled system that includes a water supply point, a liquid filtering component, a liquid sterilizing component, a carbonation component, a cooler component, an enrichment component, and a safety group. The system also includes a housing that can be accommodated in an under-sink kitchen cabinet, and a mixing component for mixing hot water with line water. The invention offers improved convenience, space-saving, and safety options for water supply in kitchens.

International Patent Publication No. WO 2010/056486 A2 disclosed a system designed to extract water moisture from the atmosphere, highly purify and condition the extracted water, and provide optional carbonation of the extracted water for human consumption. In one embodiment, the device collects water-vapor condensation from filtered intake air, then subjects the condensate to a series of purification filters and to a sterilization process in order to produce drinking water, while also providing a means to combine the purified water with CO₂ gas to facilitate dispensing carbonated water and/or carbonated drinks.

### SUMMARY OF THE DISCLOSURE

Accordingly, one object of the present disclosure is to provide a water outlet equipment installed in a kitchen cabinet, an installation method and an assembly method thereof. The water outlet equipment can be easily transported and installed by the user, and can be used normally after the installation is in place.

The provided water outlet equipment, installation method and assembly method can solve the problems as raised in the background.

The present disclosure is described by following:
The water outlet equipment is installed inside a kitchen cabinet having single-bowl sink. The water outlet equipment includes the features of claim 1.

In some embodiments, the water outlet equipment further includes a filter member. The filter member is connected to the waterway plate through a pipe. The waterway plate includes a water inlet pipe connected to a pressured water, a boiled water outlet pipe in fluid communication with the boiled water tank, a multi-purpose water outlet pipe in fluid communication with the ice water tank and the soda water tank, a pressure water inlet solenoid valve located between the water inlet pipe and the filter member, a boiled water inlet solenoid valve located between the filter member and the boiled water tank, an ice water inlet solenoid valve located between the filter member and the ice water tank, a soda water outlet solenoid valve connected to the soda water tank, an ice water outlet solenoid valve connected to the ice water tank, and a purified water outlet solenoid valve located between the multi-purpose water outlet pipe and the filter member.

In some embodiments, the refrigeration system includes a condenser arranged on the base plate, a condensation pipe connected to the condenser and access to the ice water tank, and a compressor connected to a bottom of the boiled water tank.

In some embodiments, an air intake net is arranged on one side of the external case, an intake fan is located at a position corresponding to the air intake net, and the intake fan is arranged between the air intake net and the condenser.

In some embodiments, the bottom of the air intake fan is in communication with the mount seat and the secure seat in sequence.

In some embodiments, the mount seat includes an air collecting hopper connected to the air intake fan, and a mounting ring secured on the external of the bottom of the air collecting hopper. The mounting ring is hollow, and an outer diameter of the mounting ring is fitted to inner diameter of the locking receiver.

In some embodiments, a UV disinfection device is embedded inside the multi-purpose water outlet pipe. The UV disinfection device includes an isolation shell connected to the multi-purpose water outlet pipe, a UV disinfection component arranged inside the isolation shell, and an inner channel in communication with the waterway plate and located within the isolation shell.

The present disclosure further provides a method for installing the water outlet equipment in a kitchen cabinet, including:
Step 1: opening a through hole on the bottom plate of the kitchen cabinet, providing the fitting into the hole, wherein the secure seat is completely embedded into the hole, and the locking receiver fits to the bottom plate of the kitchen cabinet;
Step 2: providing the water outlet equipment into the kitchen cabinet, and allowing the wheels to contact the bottom plate of the kitchen cabinet, and then slowly pushing the external case;
Step 3: pushing the external case until the mounting member of the base plate is fitted into the locking receiver of the kitchen cabinet to complete the installation.

Alternative, the present disclosure provides a method for assembling a water outlet equipment installed in a kitchen cabinet, including:
Step 1: anchoring the base plate to the kitchen cabinet and installing the mounting member under the base plate;
Step 2: locking the water pump, the refrigeration system, and the compressor on the top of the base plate until the water pump and the compressor are on the same straight line to complete the first step installation of the water outlet equipment;
Step 3: locking the ice water tank above the water pump, installing the soda water tank in the ice water tank, connecting the refrigeration system to the ice water tank, and then securing the boiled water tank on the compressor until the ice water tank is level with the boiled water tank to complete the second step installation of the water outlet equipment;
Step 4: securing the front and rear shells of the base plate, and connecting the waterway and the circuit before assembling the external case to form the complete water outlet equipment.

The beneficial effects of the present disclosure are as follows.

In the present disclosure, by rationally arranging the positions of the water pump, the ice water tank, the compressor, and the boiled water tank, the large-sized water tanks are arranged side by side in the same row, and the small-sized water treatment components are arranged in the same row. Accordingly, the space occupation of each components is greatly reduced. The shape and structure of each components can be complementary, so that gaps therebetween is compact, and the circulation between waterways is not affected at all. This arrangement forms the water outlet equipment for narrow space, especially suitable for the narrow installation space under the single-bowl kitchen sink. With this, the market competitiveness of the products can be greatly improved.

In the present disclosure, through the pre-embedded fittings in the kitchen cabinet and the mounting members under the base plate, the water outlet equipment can first be slid into the cabinet through the wheels during installation, and then the water outlet equipment can be secured to the locking receiver. The match-up of the mount seat and the locking receiver will produce a sound so that users can be aware of the installation status without bowing. This reduces the difficulty of installing the water outlet equipment in the narrow space.

### BRIEF DESCRIPTION OF DRAWINGS

In order to illustrate the technical solutions of the embodiments of the present invention more clearly, the accompanying drawings used in the embodiments will be briefly introduced below. It should be understood that the following drawings only show some embodiments of the present invention, and therefore do not It should be regarded as a limitation on the scope, and those skilled in the art can also obtain other related drawings based on these drawings without creative work.
FIG. 1 is a schematic diagram of components under a single-bowl kitchen sink in the prior art.
FIG. 2 is a schematic diagram of the external appearance of a water outlet equipment installed in a narrow space according to embodiments of the present disclosure.
FIG. 3 is a schematic diagram of the external appearance of the water outlet equipment installed in a narrow space according to embodiments of the present disclosure.
FIG. 4 is a schematic diagram of the interior of the water outlet equipment installed in a narrow space provided according to embodiments of the present disclosure.
FIG. 5 is an alternative schematic diagram of the interior of the water outlet equipment installed in a narrow space according to embodiments of the present disclosure.
FIG. 6 is a top view of the interior of the water outlet equipment installed in a narrow space according to embodiments of the present disclosure.
FIG. 7 is a side view of the interior of the water outlet equipment installed in a narrow space according to embodiments of the present disclosure.
FIG. 8 is an exploded view of a fitting and a mounting member according to embodiments of the present disclosure.
FIG. 9 is a schematic side view of a waterway plate according to embodiments of the present disclosure.
FIG. 10 is a cross-sectional view at G-G in FIG. 9.
FIG. 11 is an alternative schematic diagram of the interior of the water outlet equipment installed in a narrow space, showing the filter member and carbon dioxide cylinder according to embodiments of the present disclosure.
FIG. 12 is a cross-sectional view of the ice water tank, showing the soda water tank inside the ice water tank according to embodiments of the present disclosure.
FIG. 13 is a schematic diagram of the interior of the water outlet equipment, showing the ice water tank, boiled water tank in different shapes according to embodiments of the present disclosure.
FIG. 14 is a schematic diagram showing the boiled water tank, the waterway plate, and the gas pump according to embodiments of the present disclosure.
FIG. 15 is a schematic diagram showing the boiled water tank enclosed by a tank house, the waterway plat, and the gas pump according to embodiments of the present disclosure.

### DETAILED DESCRIPTION OF THE DISCLOSURE

In the description of the present invention, the terms "first" and "second" are only used for the purpose of description, and cannot be understood as referring to the purpose, technical solution and advantages of the method to be clearer. The following will be combined with the accompanying drawings in the embodiment of the present invention , clearly and completely describe the technical solutions in the embodiments of the present invention, obviously, the described embodiments are part of the embodiments of the present invention, but not all of them. Based on the embodiments in the present invention, all other embodiments obtained by persons of ordinary skill in the art without creative work show or imply relative importance or implicitly indicate the quantity of the indicated technical features. Thus, a feature defined as "first" and "second" may explicitly or implicitly include one or more of these features. In the description of the present invention, "plurality" means two or more, unless otherwise specifically defined.

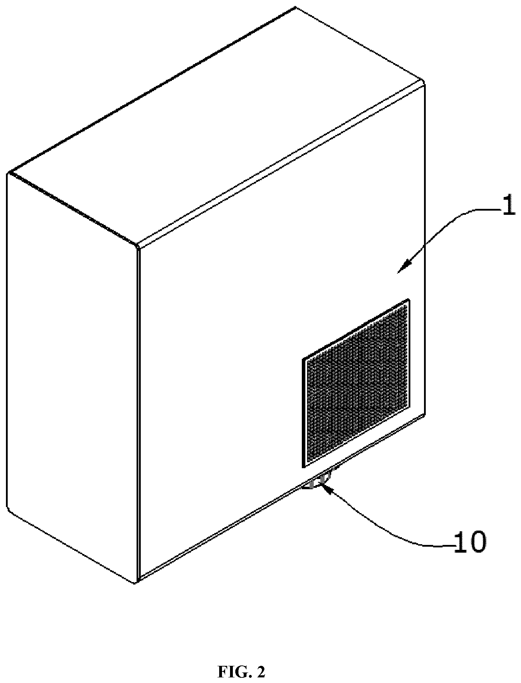

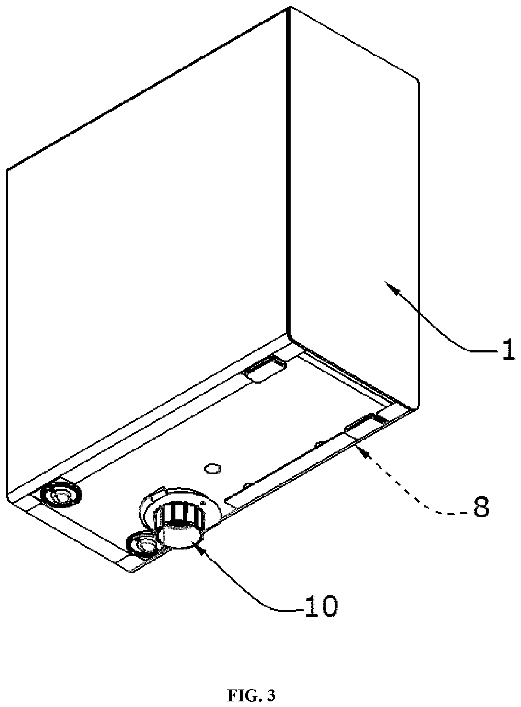

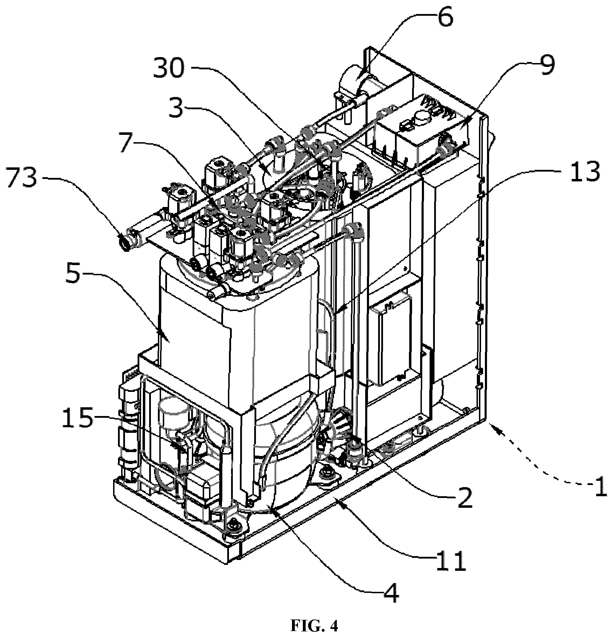

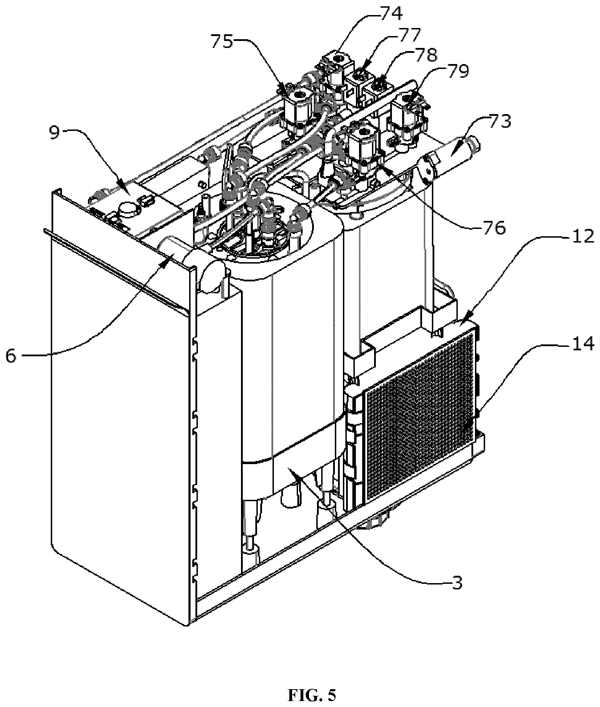

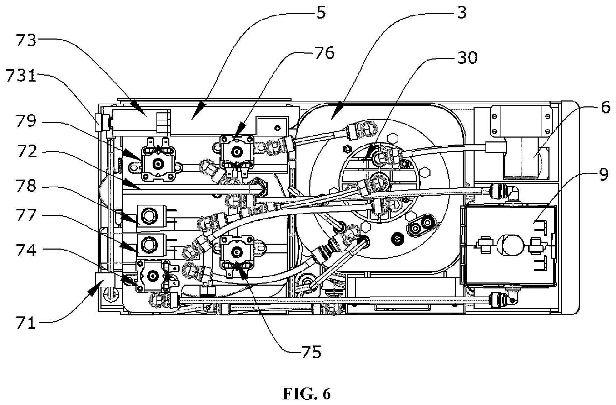

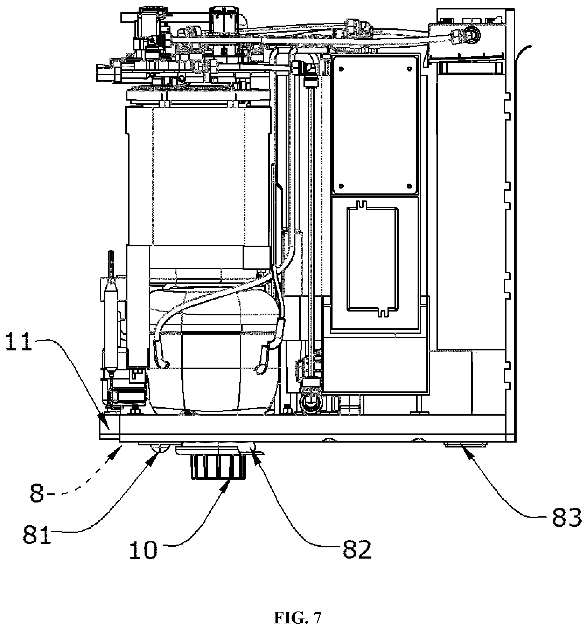

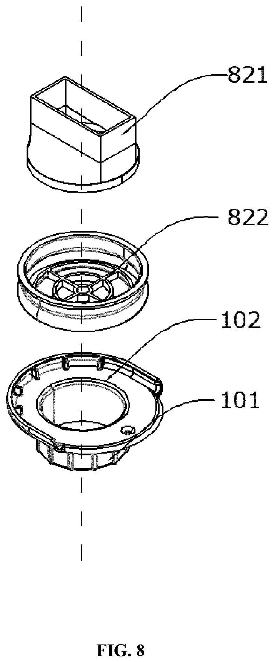

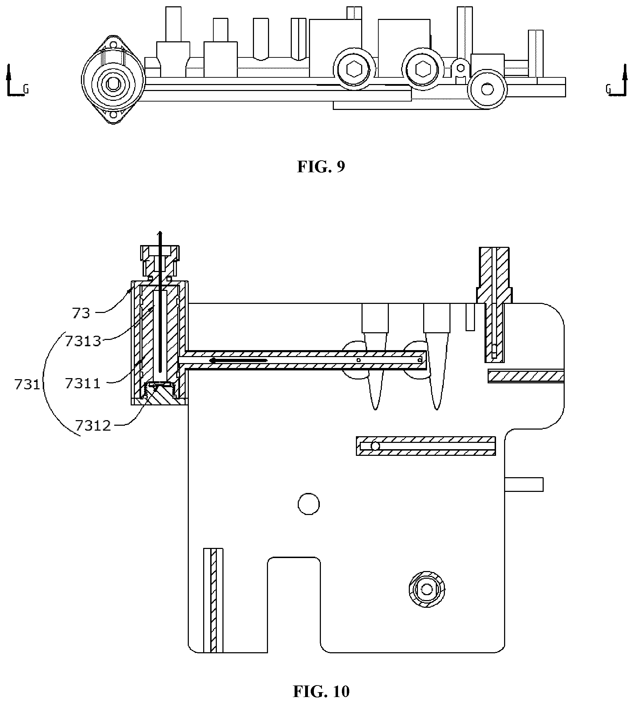

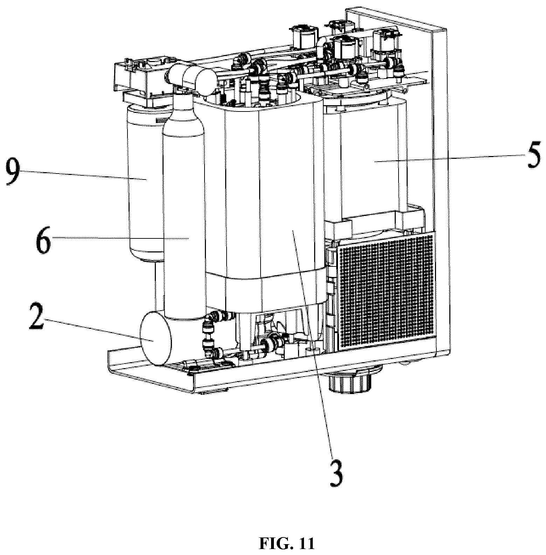

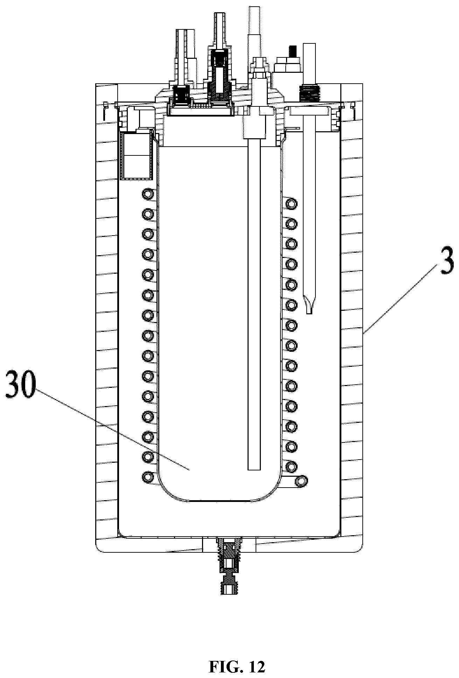

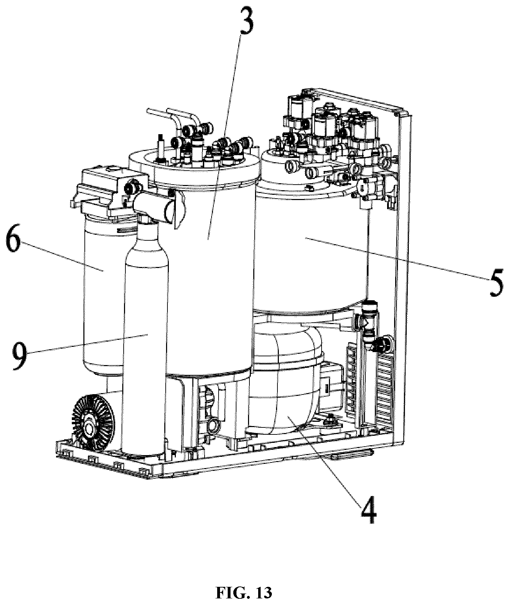

Referring to FIGS. 2-12, a water outlet equipment is illustrated. The water outlet equipment is installed with the single-bowl kitchen cabinet. The water outlet equipment includes an external case 1 having a base plate 11; water pump 2 sited on the base plate 11; an ice water tank 3 secured above the water pump 2, the ice water tank 3 being connected to a refrigeration system, and an interior of the ice water tank 3 is provided with a soda water tank 30; a compressor 4 sited on the same horizontal plane and the same straight line as the water pump 2; a boiled water tank 5 secured on the compressor 4, and is level with the ice water tank 3; a carbon dioxide cylinder 6 in fluid communication with the soda water tank 30; a waterway plate 7 anchored on the a top of the boiled water tank 5, and the waterway plate 7 is in communication with the water pump 2, the boiled water tank 5, the compressor 4, the ice water tank 3, and the soda water tank 30, respectively; a fitting 10 disposed through the bottom of the kitchen cabinet, the fitting including a secure seat 101 attached to a bottom plate of the kitchen cabinet, and the secure seat 101 extending upward to provide a locking receiver 102; a mounting member 82 anchored under the base plate 11, the mounting member 8 including a plurality of wheels 81 slidably attached to the bottom of the kitchen cabinet, and a mount seat 82 adapted for the locking receiver 102. Further shown in FIG. 13, the ice water tank, the boiled water tank may be in other shapes.

First of all, referring to FIG. 1, the space for the whole water outlet equipment is limited, and therefore it is pretty important to arrange the locations of each component. The large-sized components must be grouped together, and the small-sized components must be grouped together to fully utilize the space. In this arrangement, a small soda water tank 30 is first placed inside the ice water tank 3, with different input and output pipes leading to a reduction in the space occupied by the water tanks. Subsequently, the ice water tank 3 and the boiled water tank are arranged in a front-to-back relationship, forming a narrow structure. Then the water pump 2, the compressor 4, and other components are arranged below the ice water tank 3 and the boiled water tank 5. Since the size of these components are smaller than that of the water tanks, the overall width of the water outlet equipment is only the width of one of the tanks. This greatly reduces the whole size of the water outlet equipment and allows the water outlet equipment to enter the narrow space within the kitchen cabinet.

However, it is obviously not the starting point of this disclosure to affect the use of the water outlet equipment with the size reduction of the water outlet equipment. Accordingly, to achieve multiple water outlets without interference between different water paths, a waterway plate 7 is introduced in the present disclosure. Regardless of the processes of water water inlet, water separation, and water outlet, they all need to be distributed through the waterway plate 7. Under the distribution of the waterway plate 7, the water outlet equipment can output various types of water, such as ice water, purified water, boiled water, soda water, and the like even with reduced volume.

Before the introduction of the waterway, the pressure water may not be necessarily clean and sterile, the water outlet equipment installed in the narrow space further includes a filter member 9. The filter member 9 is connected to the waterway plate 7 through a pipe. Before the pressure water enters the waterway plate 7 for separation, all of the pressure water is forced to enter the filter member 9 for filtration. The pressure water becomes purified water after the filtration through the filter member 9. In this embodiment, the filter member 9 is a replaceable, and the material of the filter member includes activated carbon, ceramics, resin, etc.

After the pressure water is filtered into purified water by the filter member, it enters different tanks for treatments to generate water for different purposes. Therefore, a plurality of control valves with different functions are arranged in the waterway plate 7 for guiding the purified water to different tanks or water outlet positions. The specific arrangement is as follows: the waterway plate 7 includes a water inlet pipe 71 connected to the pressure water, a boiled water outlet pipe 72 connected to the boiled water tank 5, and a multi-purpose water outlet pipe 73 in communication with the ice water tank 3 and the soda water tank 30, a pressure water inlet solenoid valve 74 located between the water inlet pipe 71 and the filter member 9, a boiled water inlet solenoid valve 75 located between the filter member 9 and the boiled water tank 5, an ice water inlet solenoid valve 76 located between the filter member 9 and the ice water tank 3, soda water outlet solenoid valve 77 connected to the soda water tank 30, an ice water solenoid valve 78 connected to the ice water tank 3, and a purified water outlet solenoid valve 79 located between the multi-purpose water outlet pipe 73 and the filter member 9.

First of all, in the process of water intake, water needs to be introduced into the ice water tank 3 and the boiled water tank 5 respectively. Initially, opening the pressure water inlet solenoid valve 74 to allow the external pressure water to enter the filter member 9. The pressure water is filtered to be purified water by the filter member 9. Then opening the boiled water inlet solenoid valve 75 and the ice water inlet solenoid valve 76, respectively, to allow the purified water enters the boiled water tank 5 and the ice water tank 3 and becomes boiled water and ice water later. In this embodiment, an instant heater (not shown) is arranged within the boiled water tank, so that the purified water entering the boiled water tank can be boiled instantly. The ice water tank 3 is connected to the refrigeration system, and the refrigeration system is capable of cooling down the room temperature purified water to the ice water. More particularly, the refrigeration system includes a condenser 12 arranged on the base plate 11, a condensation pipe 13 connected to the condenser 12 and accessing to the ice water tank 3, a compressor 4 connected to the bottom of the boiled water tank 5. Alternatively, the refrigeration system further includes a evaporator (not shown). The refrigeration process through the condenser 12, the compressor 4, the evaporator, and the condensation pipe 13 is available in the prior art, and will not be repeated here.

After the ice water tank 3 and the boiled water tank 5 were all filled, the boiled water inlet solenoid valve 75 and the ice water inlet solenoid valve 76 were closed immediately. At this moment, the purified water still remains within the waterway plate 7. In this case, if the user needs purified water, he/she may open the purified water outlet solenoid valve 79 directly, and the purified water flows out from the multi-purpose water outlet pipe 73 directly by the purified water outlet solenoid valve 79.

When the user needs ice water, since ice water has already been formed within the ice water tank 3, it can be directly extracted from the ice water tank 3. During the extraction, the water pumps 2 is used to facilitate the drawn of the ice water from the ice water tank 3. At this moment, there are states of water outlet. One state is to continue opening the ice water outlet solenoid valve 78, allowing the multi-purpose water outlet pipe 73 to output ice water. The other state is to use a pipe with a check valve to introduce ice water into the soda water tank 30. The arrangement of the check valve makes the pipeline only work for water inflow, and not water outflow.

When the user needs boiled water, since boiled water has already been formed within the boiled water tank 5, the boiled water inlet solenoid valve is directly opened, allowing the continuously incoming purified water to push the already heated boiled water out, causing it to flow out through the boiled water outlet pipe 72. In this case, boiled water outlet solenoid valve is not required. Because the presence of a switch here will block the emission of hot steam generated during the water boiling, and even worse causing the expansion or explosion of the boiled water tank 5. Accordingly, the boiled water is discharged by the continuously inflow water pushing the boiled water, so that the boiled water can be discharged safely in the water outlet equipment. It is to be noted that the pipeline is extended to the bottom of the boiled water tank 5 when the purified water is inflowing the boiled water tank 5, while the boiled water outlet pipe 72 is arranged on the top of the boiled water tank 5. By this arrangement, the bottom entering water can push the upper boiled water.

Soda water is a drink that contains 0.4-0.6 grams of sodium bicarbonate per liter, or directly pours carbon dioxide into drinking water and beverages to make it saturated. In this case, the carbon dioxide gas cylinder 6 are introduced. After the water enters the soda water tank 30, opening the channel between the carbon dioxide gas cylinder 6 and the soda water tank 30, the carbon dioxide is allowed to enter the soda water tank 30 and mix with water therein to form soda water. When the soda water is expected, opening the soda water outlet solenoid valve 77 directly, and the water within the soda water tank 30 will outflow from multi-purpose water outlet pipe 73.

Based on the above-mentioned water inlet and outlet steps, the compact arrangement of the ice water tank 3, the boiling water tank 5, the water pump 2, and the compressor 4 will not affect the use of purified water, ice water, boiled water, and soda water at all. By doing so, the water outlet equipment of the present disclosure is suitable for the single-bowl kitchen cabinet. Furthermore, the narrow-shaped structure in the present disclosure can also be applied in other large-scale or even industrial environments. The functions and use of the water out equipment is will not be sacrificed because of the reduced size.

In order to improve the quality of the water outlet and avoid the residual bacteria in the filtered water, a UV disinfection device 731 is used before the output of either one of ice water, purified water, or soda water. More specifically, the UV disinfection device 731 is embedded inside the multi-purpose outlet pipe 73. The UV disinfection device 731 includes an isolation shell 7311 connected to the multi-purpose water outlet pipe 73, a UV disinfection member 7312 arranged within the isolation shell 7311, an inner channel 7313 in communication with the waterway plate 7 and arranged within the isolation shell 7311. In this embodiment, the UV disinfection member 7312 may be an anti-virus lamp, a UV sterilizer, and the like, to carry out final safety treatment before the water other than boiled water is discharged. The antivirus principle of the UV disinfection member 7312 is available in the prior art, and will not be repeated here. Because the UV disinfection member 7312 emits ultraviolet rays, the long term use of the US disinfection member 7312 within the multi-purpose water outlet pipe 73 made of ordinary plastic will result in corrosion of the plastic pipe, and cause water safety problems. Therefore, the UV disinfection member 7312 is placed in the isolation shell 7311, and the water that needs to flow out of the multi-purpose water outlet pipe 73 will first enter the inner channel 7313 through the isolation shell 7311, pass through the UV disinfection member 7312 for disinfection, and then discharged from the multi-purpose water outlet pipe 73. This not only achieves the purpose of sterilization and disinfection, but also coexists stably with the pipeline. In this embodiment, the material of the isolation shell 7311 is Teflon, which is relatively corrosion-resistant.

After the problem of the water outlet is solved, the problem of installation needs to be surfaced. The existing installation method is that the user holds the water outlet equipment weighing several tens of kilograms in his arms, and puts it into the cabinet with his waist bowed. Because of the large weight, the water outlet equipment in the prior art cannot be pushed, and the user have to move it hardly, which is time-consuming and laborious. At the same time, it is difficult to ensure whether the water outlet equipment is installed in place and whether it needs to be re-adjusted later. Therefore, in the present disclosure, holes are provided in the kitchen cabinet, and fittings 10 are mounted in the holes. Furthermore, one end of the water outlet equipment of the present disclosure is provided with mounting member 8 for matching up the fittings 10, so that the water outlet equipment can be installed in place. Specifically, the fitting 10 is locked to the hole through a secure seat 101 for positioning the whole fitting 10. The locking receiver 102 is configured for locking. One end of the opening of the locking receiver 102 faces the opening of the kitchen cabinet. During the installation of the water outlet equipment, firstly, the whole water outlet equipment is pushed into the cabinet through the wheels 81, relieving lots of burden for the user to move the water outlet equipment. After a period of sliding, the mount seat 82 will snap into the locking receiver 102, and spread the opening of the locking receiver 102. The user will later hear a click sound, and that means the water outlet equipment is installed in place, and no more push is required. After the water outlet equipment is installed in place, the position of the water outlet equipment needs no more adjustment, and therefore saves labor for installation. With the use of wheels 81, the mount seat 82, and the locking receiver 102, the water outlet equipment can be slidden to expected positions and lock there. When disassembly is required, the user only needs to pull the water outlet equipment, so that the mount seat 82 is forced out from the locking receiver 102, and then slide the equipment. Convenience is created for both the installation and disassembling.

After the wheels 81 finish sliding, the mount seat 82 and the locking receiver 102 are secured, the bottom of the whole water outlet equipment must remain stable. Therefore, the wheels are restricted, and a gasket 83 is fixed on one side of the bottom of the mounting member 8, away from the two wheels 81. During the process of installation, the water outlet equipment is first titled, slid into the specified position using the wheels 81, and then leveled to contact with the bottom inside the kitchen cabinet. By doing so, the translocation phenomena such as slippage of the water outlet equipment after installation is avoided.

In addition, the mount seat 82 and the locking receiver 102 do more than just locking. In devices with water-cooling functions, components like the condenser 12, condenser 13, and compressor 4 generate significant heat during operation. If this heat is not expelled, it may affect the normal operation of the equipment. The traditional method of drilling holes in the cabinet door to expel hot air is not aesthetically pleasing and compromises the cabinet's integrity. In order to solve the this problem, in the present disclosure, first, an air intake net 14 is provided on one side of the external case 1, and an air intake fan 15 is arranged at a position corresponding to the air intake net 14, and the air intake fan 15 is arranged between the air intake net 14 and the condensers 12. The air intake fan 15 allows the external air to be introduced into the cabinet from side. Then, because the bottom of the air intake fan 15 is in communication with the mount seat 82, the secure seat 101 successively, the air intake from side surface will take away the heat generated by the refrigeration system. Moreover, the air intake for side may be exhausted to the outside of the kitchen cabinet through the mount seat 82, the secure seat 101 on the bottom. This side-intake and bottom-exhaust manner isolates the air intake and the air exhausting, so that the low-temperature intaking air is separated from the high-temperature exhausting air. This ensures the long term use of the machine without providing an opening on the door of the cabinet. The appearance and integrity of the whole equipment will not be affected, and makes the equipment more acceptable for people.

In order to receive air from the air intake fan 15 and form a better connection with the secure seat 101, the mount seat 82 includes an air collecting hopper 821 connected to the air intake fan 15, and a mounting ring 822 secured on the external of the bottom of the air collecting hopper 821. The mounting ring 822 is hollow, and an outer diameter of the mounting ring 822 is fitted to inner diameter of the locking receiver 102. The top of the air collecting hopper 821 is a rectangular-shaped structure connected to the air intake fan 15, and the bottom of the air collecting hopper 821 is an inverted bowl-shaped structure. The bowl edge of the inverted bowl-shaped structure is fitted with the mounting ring 822. The bowl-shaped structure may increase the air passing volume. Moreover, because the mounting ring 822 needs an air passing space, and cannot be completely hollow, a plurality of ribs are arranged whin the mounting ring 822 to form a cutout arrangement. This increases the strength of the mounting ring without affecting the air passing.

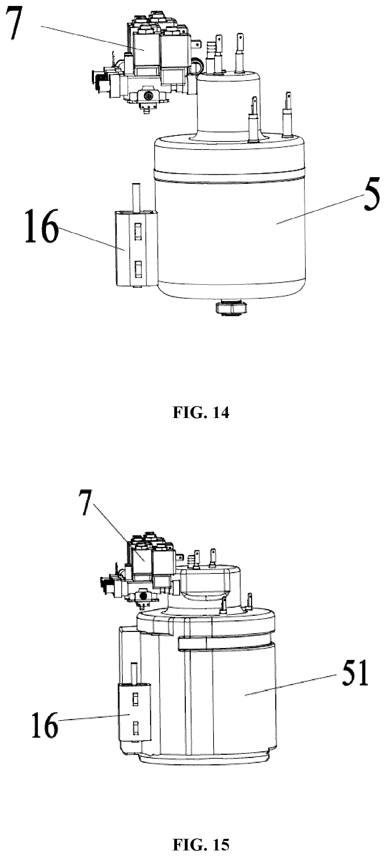

As show in FIG. 14 and FIG. 15, the present embodiment further comprises a gas pump 16 located adjacent to the boiled water tank 5. Optionally, the boiled water tank 5 is enclosed by a tank house 51, and the gas pump 16 is attached to the tank house 51. The gas pump is in fluid communication with the waterway plate 7, especially the multi-purpose water outlet pipe 73. This arrangement allows to keep the multi-purpose water outlet pipe 73 dry. The gas pump 16 is capable of pumping gas through the waterway plate, especially the multi-purpose water outlet pipe 73. The flowing gas will take away the residual water in the multi-purpose water outlet pipe 73, and thus keep the multi-purpose water outlet pipe 73 dry after use. Accordingly, the water pathway and water pipes of the present disclosure can remain dry after the ice water or soda water is released. This effectively inhibits bacterial growth and exhibits antibacterial properties in the water pathway and water pipes.

In alternative embodiment, the present disclosure further provides a method for installing the water outlet equipment in a narrow space. The method including the following steps.

Step 1: opening a through hole on the bottom plate of the kitchen cabinet, providing the fitting 10 into the hole, wherein the secure seat 101 is completely embedded into the hole, and the locking receiver 102 fits to the bottom plate of the kitchen cabinet.

Step 2: providing the water outlet equipment into the kitchen cabinet, and allowing the wheels 81 to contact the bottom plate of the kitchen cabinet, and then slowly pushing the external case 1.

Step 3: pushing the external case 1 until the mounting member 8 of the base plate 11 is fitted into the locking receiver 102 of the kitchen cabinet to complete the installation.

The installation method as provided firstly allows the user to slide the water outlet equipment easily. After the water outlet equipment is slied to the expected position, it allows the user to be aware of the installation status of the water outlet equipment. The opening on the bottom of the equipment is not only for air exhausting, but also for presetting the fitting 10. One hole for two purposes. By the opening, both air exhausting and positioning installation are achieved.

The opening on the bottom of the kitchen cabinet avoids the front surface of the kitchen cabinet to be pierced. The opening on the bottom will not affect the appearance of the whole equipment, and therefore improving the aesthetic appearance and integrity of the kitchen cabinet.

The fitting preset on the bottom of the kitchen cabinet allows the water outlet equipment can be guided, and fitting into the proper position correctly and stably. Furthermore, once the equipment is secured, it exhibits a great stability and will not be easy to slide it again.

Because the water outlet equipment is installed in the single-bowl kitchen cabinet with limited installation space, the size of the water outlet equipment is a matter of great account. The size of water outlet equipment in the prior art definitely cannot be installed into the kitchen cabinet with limited space. Accordingly, the equipment must be assembled in layers, and the structures of each layer are in a side-by-side state, so as to form the water outlet equipment that can be installed in a narrow space.

Accordingly, another embodiment of the present disclosure provides a method for assembling the water outlet equipment adapted narrow space. The method includes the following steps.
Step 1: anchoring the base plate 11 and installing the mounting member 8 under the base plate 11;
Step 2: locking the water pump 2, the refrigeration system, and the compressor 4 on the top of the base plate 11 until the water pump 2 and the compressor 4 are on the same straight line to complete the first step assembly of the water outlet equipment;
Step 3: locking the ice water tank 3 above the water pump 2, installing the soda water tank 30 in the ice water tank 3, connecting the refrigeration system to the ice water tank 3, and then securing the boiled water tank 5 on the compressor 4 until the ice water tank 3 is level with the boiled water tank 5 to complete the second step assembly of the water outlet equipment;
Step 4: securing the front and rear shells of the base plate 11, and connecting the waterway and the circuit before assembling the external case 1 to form the complete water outlet equipment.

First, mounting the base plate first, and then placing water treatments such as the water pump 2, the refrigeration system, and the compressor 4 at the bottom, and placing the water tank on the top. It should be noted that the water treatments are arranged side by side, and the water tanks are also arranged side by side. From the front view, the entire water outlet equipment only occupies the length of one water tank, and the overall space is compressed to the narrowest.

## Claims

1. A water outlet equipment with a single-bowl kitchen cabinet, the water outlet equipment being installed within the single-bowl kitchen cabinet; the water outlet equipment comprises:
an external case (1) having a base plate (11);
a water pump (2) sited on the base plate (11);
an ice water tank (3) secured above the water pump (2), the ice water tank (3) being connected to a refrigeration system, and an interior of the ice water tank (3) is provided with a soda water tank (30);
a compressor (4) of the refrigeration system sited on the same horizontal plane as the water pump (2);
a boiled water tank (5) secured on the compressor (4); the boiled water tank (5) and the ice water tank (3) have the same ceiling height;
a carbon dioxide cylinder (6) in communication with the soda water tank (30); and
a waterway plate (7) anchored on a top of the boiled water tank (5), and the waterway plate (7) is in communication with the water pump (2), the boiled water tank (5), the compressor (4), the ice water tank (3), and the soda water tank (30), respectively;
**characterized in that** the water outlet equipment further comprises:
a fitting (10) disposed through a bottom of the kitchen cabinet, the fitting (10) comprising a secure seat (101) attached to the bottom of the kitchen cabinet, and the secure seat (101) extending upward to provide a locking receiver (102);
a mounting member (8) anchored under the base plate (11), the mounting member (8) comprising a plurality of wheels (81) attached to the bottom of the kitchen cabinet, and a mount seat (82) adapted for the locking receiver.

2. The water outlet equipment with a single-bowl kitchen cabinet according to claim 1, **characterized in that** the water outlet equipment further comprises a filter member (9); the filter member (9) is connected to the waterway plate (7) through a pipe; the waterway plate (7) comprises a water inlet pipe (71) connected to a pressured water, a boiled water outlet pipe (72) in fluid communication with the boiled water tank (5), a multi-purpose water outlet pipe (73) in fluid communication with the ice water tank (3) and the soda water tank (30), a pressure water inlet solenoid valve (74) located between the water inlet pipe (71) and the filter member (9), a boiled water inlet solenoid valve (75) located between the filter member (9) and the boiled water tank (5), an ice water inlet solenoid valve (76) located between the filter member (9) and the ice water tank (3), a soda water outlet solenoid valve (77) connected to the soda water tank (30), an ice water outlet solenoid valve (78) connected to the ice water tank (3), and a purified water outlet solenoid valve (79) located between the multi-purpose water outlet pipe (73) and the filter member (9).

3. The water outlet equipment with a single-bowl kitchen cabinet according to claim 1, **characterized in that** the refrigeration system comprises a condenser (12) arranged on the base plate (11), a condensation pipe (13) connected to the condenser (12) and communicated with the ice water tank (3), the compressor (4) being connected to a bottom of the boiled water tank (5).

4. The water outlet equipment with a single-bowl kitchen cabinet according to claim 1, **characterized in that** an air intake net (14) is arranged on one side of the external case (1), an intake fan (15) is disposed corresponding to the position of the air intake net (14), and the intake fan (15) is arranged between the air intake net (14) and the condenser (12).

5. The water outlet equipment with a single-bowl kitchen cabinet according to claim 1, **characterized in that** the bottom of the air intake fan (15) is in communication with the mount seat (82) and the secure seat (101) in sequence.

6. The water outlet equipment with a single-bowl kitchen cabinet according to claim 1, **characterized in that** the mount seat (82) comprises an air collecting hopper (821) connected to the air intake fan (15), and a mounting ring (822) secured on the external of the bottom of the air collecting hopper (821); the mounting ring (822) is hollow, and an outer diameter of the mounting ring (822) is fitted to inner diameter of the locking receiver (102).

7. The water outlet equipment with a single-bowl kitchen cabinet according to claim 1, **characterized in that** a UV disinfection device (731) is embedded inside a multi-purpose water outlet pipe (73); the UV disinfection device (731) comprises an isolation shell (7311) connected to the multi-purpose water outlet pipe (73), a UV disinfection member (7312) arranged within the isolation shell (7311), and an inner channel (7313) in communication with the waterway plate (7) and located within the isolation shell (7311).

8. A method for installing the water outlet equipment according to any one of claims 1- 7 within the single-bowl kitchen cabinet, **characterized by** comprising the following steps:
Step 1: opening a through hole on the bottom plate of the kitchen cabinet, providing the fitting (10) into the hole, wherein the secure seat (101) is completely embedded into the hole, and the locking receiver (102) fits to the bottom plate of the kitchen cabinet;
Step 2: providing the water outlet equipment into the kitchen cabinet, and allowing the wheels (81) to contact the bottom plate of the kitchen cabinet, and then slowly pushing the external case (1); and
Step 3: pushing the external case (1) until the mounting member (8) of the base plate (11) is fitted into the locking receiver (102) of the kitchen cabinet to complete the installation.

9. A method for assembling the water outlet equipment according to any one of claims 1- 7 within the single-bowl kitchen cabinet, **characterized by** comprising the following steps:
Step 1: anchoring the base plate (11) to the kitchen cabinet and assembling the mounting member (8) under the base plate (11);
Step 2: locking the water pump (2), the refrigeration system, and the compressor (4) on the top of the base plate (11) until the water pump (2) and the compressor (4) are on the same straight line to complete the first step assembly of the water outlet equipment;
Step 3: locking the ice water tank (3) above the water pump (2), mounting the soda water tank (3) in the ice water tank (3), connecting the refrigeration system to the ice water tank (3), and then securing the boiled water tank (5) on the compressor (4) until the ice water tank (3) is level with the boiled water tank (5) to complete the second step assembly of the water outlet equipment; and
Step 4: securing a front shell and a rear shell of the base plate (11), and connecting the waterway and a circuit before assembling the external case (1) to form the complete water outlet equipment.

## Patentansprüche

1. Wasserausgabegerät mit einem Spülenschrank mit Einzelbecken, wobei das Wasserausgabegerät innerhalb des Spülenschranks installiert ist, umfassend:
ein Außengehäuse (1) mit einer Bodenplatte (11);
eine Wasserpumpe (2), die auf der Bodenplatte (11) angeordnet ist;
einen Kaltwassertank (3), der oberhalb der Wasserpumpe (2) befestigt ist, wobei der Kaltwassertank (3) mit einem Kühlsystem verbunden ist, und im Inneren des Kaltwassertanks (3) ein Sodawassertank (30) vorgesehen ist;
einen Kompressor (4) des Kühlsystems, der auf derselben Horizontalebene wie die Wasserpumpe (2) angeordnet ist;
einen Heißwassertank (5), der auf dem Kompressor (4) befestigt ist, wobei der Heißwassertank (5) und der Kaltwassertank (3) die gleiche Oberkante aufweisen;
eine Kohlendioxidflasche (6), die mit dem Sodawassertank (30) in Verbindung steht; und
eine Wasserverteilereinheit (7), die auf dem Heißwassertank (5) befestigt ist, wobei die Wasserverteilereinheit (7) jeweils mit der Wasserpumpe (2), dem Heißwassertank (5), dem Kompressor (4), dem Kaltwassertank (3) und dem Sodawassertank (30) in Verbindung steht;
**dadurch gekennzeichnet, dass** das Wasserausgabegerät ferner umfasst:
eine Verbindungseinheit (10), die durch den Boden des Spülenschranks geführt ist, wobei die Verbindungseinheit (10) einen Befestigungssitz (101) umfasst, der am Boden des Spülenschranks angebracht ist und sich nach oben zu einer Verriegelungsaufnahme (102) erstreckt;
ein Befestigungselement (8), das unter der Bodenplatte (11) befestigt ist, wobei das Befestigungselement (8) mehrere Räder (81) umfasst, die am Boden des Spülenschranks befestigt sind, sowie einen Montagesitz (82), der für die Verriegelungsaufnahme ausgelegt ist.

2. Wasserausgabegerät nach Anspruch 1, **dadurch gekennzeichnet, dass** es ferner ein Filterelement (9) umfasst, wobei das Filterelement (9) über ein Rohr mit der Wasserverteilereinheit (7) verbunden ist; die Wasserverteilereinheit (7) umfasst ein Zulaufrohr (71) für Druckwasser, ein Heißwasserauslassrohr (72), das mit dem Heißwassertank (5) in fluidischer Verbindung steht, ein Mehrzweckauslassrohr (73), das mit dem Kaltwassertank (3) und dem Sodawassertank (30) in fluidischer Verbindung steht, ein Druckwasserzulauf-Magnetventil (74) zwischen dem Zulaufrohr (71) und dem Filterelement (9), ein Heißwasserzulauf-Magnetventil (75) zwischen dem Filterelement (9) und dem Heißwassertank (5), ein Kaltwasserzulauf-Magnetventil (76) zwischen dem Filterelement (9) und dem Kaltwassertank (3), ein Sodawasserauslass-Magnetventil (77), das mit dem Sodawassertank (30) verbunden ist, ein Kaltwasserauslass-Magnetventil (78), das mit dem Kaltwassertank (3) verbunden ist, sowie ein Reinwasserauslass-Magnetventil (79) zwischen dem Mehrzweckauslassrohr (73) und dem Filterelement (9).

3. Wasserausgabegerät nach Anspruch 1, **dadurch gekennzeichnet, dass** das Kühlsystem einen Kondensator (12) auf der Bodenplatte (11), ein Kondensrohr (13), das mit dem Kondensator (12) verbunden ist und mit dem Kaltwassertank (3) in Verbindung steht, sowie einen Kompressor (4), der mit dem Boden des Heißwassertanks (5) verbunden ist, umfasst.

4. Wasserausgabegerät nach Anspruch 1, **dadurch gekennzeichnet, dass** an einer Seite des Außengehäuses (1) ein Lufteinlassgitter (14) angeordnet ist, ein Lufteinlassventilator (15) entsprechend der Position des Lufteinlassgitters (14) vorgesehen ist und zwischen dem Lufteinlassgitter (14) und dem Kondensator (12) angeordnet ist.

5. Wasserausgabegerät nach Anspruch 1, **dadurch gekennzeichnet, dass** der Boden des Lufteinlassventilators (15) nacheinander mit dem Montagesitz (82) und dem Befestigungssitz (101) in Verbindung steht.

6. Wasserausgabegerät nach Anspruch 1, **dadurch gekennzeichnet, dass** der Montagesitz (82) einen Luftsammeltrichter (821) umfasst, der mit dem Lufteinlassventilator (15) verbunden ist, und einen Befestigungsring (822), der außen am Boden des Luftsammeltrichters (821) befestigt ist; wobei der Befestigungsring (822) hohl ist und sein Außendurchmesser an den Innendurchmesser der Verriegelungsaufnahme (102) angepasst ist.

7. Wasserausgabegerät nach Anspruch 1, **dadurch gekennzeichnet, dass** eine UV-Desinfektionseinrichtung (731) im Inneren des Mehrzweckauslassrohrs (73) integriert ist; wobei die UV-Desinfektionseinrichtung (731) eine Isolierhülle (7311), die mit dem Mehrzweckauslassrohr (73) verbunden ist, ein darin angeordnetes UV-Desinfektionselement (7312) sowie einen Innenkanal (7313) umfasst, der mit der Wasserverteilereinheit (7) in Verbindung steht und sich innerhalb der Isolierhülle (7311) befindet.

8. Verfahren zum Einbau des Wasserausgabegeräts gemäß einem der Ansprüche 1 bis 7 in den Spülenschrank mit Einzelbecken, **dadurch gekennzeichnet, dass** es die folgenden Schritte umfasst:
Schritt 1: Öffnen einer Durchgangsbohrung in der Bodenplatte des Spülenschranks, Einführen der Verbindungseinheit (10) in die Bohrung, wobei der Befestigungssitz (101) vollständig in die Bohrung eingebettet wird und die Verriegelungsaufnahme (102) zur Bodenplatte passt;
Schritt 2: Einführen des Wasserausgabegeräts in den Spülenschrank, wobei die Räder (81) mit der Bodenplatte des Schranks in Kontakt gebracht und das Außengehäuse (1) langsam eingeschoben wird;
Schritt 3: Einschieben des Außengehäuses (1), bis das Befestigungselement (8) der Bodenplatte (11) in die Verriegelungsaufnahme (102) des Schranks eingesetzt ist, um den Einbau abzuschließen.

9. Verfahren zur Montage des Wasserausgabegeräts gemäß einem der Ansprüche 1 bis 7 in einem Spülenschrank mit Einzelbecken, **dadurch gekennzeichnet, dass** es die folgenden Schritte umfasst:
Schritt 1: Befestigung der Bodenplatte (11) am Spülenschrank und Montage des Befestigungselements (8) unter der Bodenplatte (11);
Schritt 2: Befestigung der Wasserpumpe (2), des Kühlsystems und des Kompressors (4) auf der Bodenplatte (11), wobei Wasserpumpe (2) und Kompressor (4) in einer Linie liegen, um die erste Montagestufe des Geräts abzuschließen;
Schritt 3: Befestigung des Kaltwassertanks (3) oberhalb der Wasserpumpe (2), Einsetzen des Sodawassertanks (30) in den Kaltwassertank (3), Verbindung des Kühlsystems mit dem Kaltwassertank (3), Befestigung des Heißwassertanks (5) auf dem Kompressor (4), bis der Kaltwassertank (3) und der Heißwassertank (5) auf gleicher Höhe sind, zur Fertigstellung der zweiten Montagestufe;
Schritt 4: Befestigung der Vorder- und Rückabdeckung der Bodenplatte (11), Anschluss der Wasserwege und der elektrischen Leitungen vor dem Einbau des Außengehäuses (1) zur Komplettierung des Wasserausgabegeräts.

## Revendications

1. Équipement de distribution d'eau intégré à un meuble de cuisine à bac unique, ledit équipement de distribution d'eau étant installé à l'intérieur du meuble de cuisine à bac unique, comprenant :
un boîtier externe (1) doté d'une plaque de base (11) ;
une pompe à eau (2) disposée sur la plaque de base (11) ;
un réservoir d'eau froide (3) fixé au-dessus de la pompe à eau (2), ledit réservoir d'eau froide (3) étant connecté à un système de réfrigération, et contenant en son intérieur un réservoir d'eau gazeuse (30) ;
un compresseur (4) du système de réfrigération disposé sur le même plan horizontal que la pompe à eau (2) ;
un réservoir d'eau bouillie (5) fixé sur le compresseur (4), les réservoirs d'eau bouillie (5) et d'eau froide (3) ayant la même hauteur de plafond ;
une bouteille de dioxyde de carbone (6) en communication avec le réservoir d'eau gazeuse (30) ;
et une plaque de distribution (7) fixée sur le dessus du réservoir d'eau bouillie (5), ladite plaque de distribution (7) étant en communication avec la pompe à eau (2), le réservoir d'eau bouillie (5), le compresseur (4), le réservoir d'eau froide (3) et le réservoir d'eau gazeuse (30) respectivement ;
**caractérisé en ce que** l'équipement de distribution d'eau comprend en outre :
un raccord (10) traversant le fond du meuble de cuisine, ledit raccord (10) comprenant une base de fixation (101) attachée au fond du meuble de cuisine, ladite base de fixation (101) s'étendant vers le haut pour former un récepteur de verrouillage (102) ;
un élément de montage (8) fixé sous la plaque de base (11), ledit élément de montage (8) comprenant une pluralité de roues (81) fixées au fond du meuble de cuisine, et un socle de montage (82) adapté pour coopérer avec le récepteur de verrouillage.

2. Équipement selon la revendication 1, **caractérisé en ce qu'**il comprend en outre un élément de filtration (9), ledit élément de filtration (9) étant connecté à la plaque de distribution (7) via un tuyau ; la plaque de distribution (7) comprenant un tuyau d'entrée d'eau (71) connecté à une arrivée d'eau sous pression, un tuyau de sortie d'eau bouillie (72) en communication fluide avec le réservoir d'eau bouillie (5), un tuyau de sortie multifonction (73) en communication fluide avec le réservoir d'eau froide (3) et le réservoir d'eau gazeuse (30), une électrovanne d'entrée d'eau sous pression (74) entre le tuyau d'entrée (71) et l'élément de filtration (9), une électrovanne d'entrée d'eau bouillie (75) entre l'élément de filtration (9) et le réservoir d'eau bouillie (5), une électrovanne d'entrée d'eau froide (76) entre l'élément de filtration (9) et le réservoir d'eau froide (3), une électrovanne de sortie d'eau gazeuse (77) connectée au réservoir d'eau gazeuse (30), une électrovanne de sortie d'eau froide (78) connectée au réservoir d'eau froide (3), et une électrovanne de sortie d'eau purifiée (79) située entre le tuyau de sortie multifonction (73) et l'élément de filtration (9).

3. Équipement selon la revendication 1, **caractérisé en ce que** le système de réfrigération comprend un condenseur (12) disposé sur la plaque de base (11), un tuyau de condensation (13) connecté au condenseur (12) et en communication avec le réservoir d'eau froide (3), le compresseur (4) étant connecté à la base du réservoir d'eau bouillie (5).

4. Équipement selon la revendication 1, **caractérisé en ce qu'**une grille d'entrée d'air (14) est agencée sur un côté du boîtier externe (1), un ventilateur d'entrée (15) étant disposé en face de la grille d'entrée d'air (14), ledit ventilateur (15) étant situé entre la grille d'entrée d'air (14) et le condenseur (12).

5. Équipement selon la revendication 1, **caractérisé en ce que** la base du ventilateur d'entrée d'air (15) est en communication avec le socle de montage (82), puis avec la base de fixation (101).

6. Équipement selon la revendication 1, **caractérisé en ce que** le socle de montage (82) comprend une trémie de collecte d'air (821) connectée au ventilateur d'entrée d'air (15), et un anneau de montage (822) fixé à l'extérieur de la base de ladite trémie (821) ; l'anneau de montage (822) étant creux, et son diamètre extérieur étant adapté au diamètre intérieur du récepteur de verrouillage (102).

7. Équipement selon la revendication 1, **caractérisé en ce qu'**un dispositif de désinfection UV (731) est intégré dans le tuyau de sortie multifonction (73), ledit dispositif de désinfection UV (731) comprenant une coque d'isolation (7311) connectée au tuyau (73), un élément de désinfection UV (7312) disposé à l'intérieur de la coque (7311), et un canal intérieur (7313) en communication avec la plaque de distribution (7) et situé dans ladite coque (7311).

8. Procédé d'installation de l'équipement selon l'une quelconque des revendications 1 à 7 à l'intérieur d'un meuble de cuisine à bac unique, **caractérisé par** les étapes suivantes :
Étape 1 : ouverture d'un trou traversant la plaque inférieure du meuble, insertion du raccord (10) dans le trou, la base de fixation (101) étant complètement encastrée, et le récepteur de verrouillage (102) s'ajustant à la plaque inférieure ;
Étape 2 : introduction de l'équipement dans le meuble, les roues (81) venant au contact de la plaque inférieure, puis poussée lente du boîtier externe (1) ;
Étape 3 : poursuite de la poussée jusqu'à insertion de l'élément de montage (8) de la plaque de base (11) dans le récepteur de verrouillage (102) pour compléter l'installation.

9. Procédé d'assemblage de l'équipement selon l'une quelconque des revendications 1 à 7 à l'intérieur d'un meuble de cuisine à bac unique, **caractérisé par** les étapes suivantes :
Étape 1 : fixation de la plaque de base (11) au meuble de cuisine et assemblage de l'élément de montage (8) sous ladite plaque ;
Étape 2 : verrouillage de la pompe à eau (2), du système de réfrigération et du compresseur (4) sur la plaque de base (11), jusqu'à ce que la pompe (2) et le compresseur (4) soient alignés pour achever la première étape d'assemblage ;
Étape 3 : fixation du réservoir d'eau froide (3) au-dessus de la pompe (2), insertion du réservoir d'eau gazeuse (30) dans le réservoir d'eau froide (3), connexion du système de réfrigération au réservoir (3), puis fixation du réservoir d'eau bouillie (5) sur le compresseur (4) jusqu'à égalisation des hauteurs ;
Étape 4 : fixation de la coque avant et arrière sur la plaque de base (11), connexion des canalisations et circuits avant montage du boîtier externe (1) pour former l'équipement complet.
